# EUROPÄISCHE PATENTANMELDUNG

(11) **EP 2 527 065 A1**
(43) Veröffentlichungstag der Anmeldung: **28.11.2012**
(21) Anmeldenummer: 11167860.3
(22) Anmeldetag: 27.05.2011
(51) Int. Cl.: B23B 51/02, B23B 51/06

(54) **Bohrwerkzeug**

(71) Anmelder: Mikron Tool Sa Agno, 6982 Agno (CH)
(72) Erfinder: Schnyder, Markus, 6935 Bosco, Luganese (CH); Pigat, Daniele, 6932 Breganzona (CH); Masera, Andrea, 6949 Comano (CH)
(74) Vertreter: Frischknecht, Harry Ralph

(57) **Zusammenfassung**

Ein Bohrwerkzeug zur Herstellung einer Bohrung umfasst einen Einspannabschnitt (1) mit einer Mittelachse (M) und einem Einspanndurchmesser (D1), einen sich dem Einspannabschnitt (1) in Richtung der Mittelachse (M) anschliessenden Bohrerabschnitt (3) mit einem Bohrerdurchmesser (D3), wobei der Bohrerdurchmesser (D3) kleiner ist als der Einspanndurchmesser (D1). Das Bohrwerkzeug umfasst weiter mindestens einen Fluidkanal (15), welcher sich durch den Einspannabschnitt (1) hindurch erstreckt und vom Einspannabschnitt (1) entlang der Mittelachse (M) her gesehen vor dem Bohrerabschnitt (3) mit mindestens einer Austrittsöffnung (16) heraustritt, wobei ein Fluid über die Austrittsöffnung (16) aus dem Fluidkanal (15) herausführbar ist.

## Beschreibung

### TECHNISCHES GEBIET

Die vorliegende Erfindung betrifft ein Bohrwerkzeug mit einem Fluidkanal zur Zuführung von Schmiermitteln oder Kühlmitteln, insbesondere ein Bohrwerkzeug mit Fluidkanal für Bohrungen mit einem kleinen Durchmesser, insbesondere im Bereich von 0.01 mm bis 2 mm, gemäss dem Oberbegriff von Anspruch 1

### STAND DER TECHNIK

Aus dem Stand der Technik ist bekannt, dass während eines Bohrprozesses zur Herstellung einer Bohrung das Bohrwerkzeug mit einem Kühlmittel gekühlt oder mit einer Schmieremulsion geschmiert wird. Das Kühlmittel bzw. das Schmiermittel kann dabei über vielfältige Weise zur Schneide des Bohrwerkzeuges gebracht werden. Beispielsweise über im Bohrwerkzeug angeordnete interne Fluidkanäle, welche sich vom Einspannschaft bis hin zur Bohrerspitze erstrecken. Alternativ kann das Kühlmittel bzw. Schmiermittel auch direkt dem Bohrer über einen Schlauch zugeführt werden.

Gerade bei Bohrungen mit einem kleinen Durchmesser bringt die Kühlung des Werkzeuges eine Reihe von Problemen bzw. Nachteilen mit sich. Unter einem kleinen Durchmesser werden Bohrwerkzeuge bzw. Bohrungen verstanden, welche einen Durchmesser im Bereich von 0.01 mm bis 2 mm aufweisen. Solche Bohrungen werden beispielsweise in der Uhrentechnik, Filtertechnik etc. eingesetzt.

Die externe Kühlung kann zu einer Auslenkung des Bohrers seitlich zur Mittelachse führen und somit die Qualität der Bohrung negativ beeinflussen. Interne Kühlkanäle sorgen für eine unerwünschte Schwächung des Werkzeuges.

### DARSTELLUNG DER ERFINDUNG

Ausgehend von diesem Stand der Technik liegt der Erfindung eine Aufgabe zugrunde, ein Bohrwerkzeug anzugeben, welches eine verbesserte Kühlmittelzufuhr bzw. Schmiermittelzufuhr bereitstellt. Insbesondere ist eine Aufgabe ein derartiges Bohrwerkzeug für Bohrungen im Durchmesserbereich von 0.01 mm bis 2 mm anzugeben, wobei das Bohrwerkzeug zudem einen sicheren Bohrprozess ermöglichen soll.

Eine solche Aufgabe löst ein Bohrwerkzeug nach Anspruch 1. Demgemäss umfasst ein Bohrwerkzeug zur Herstellung einer Bohrung einen Einspannabschnitt mit einer Mittelachse und einem Einspanndurchmesser, einen sich dem Einspannabschnitt in Richtung der Mittelachse anschliessenden Bohrerabschnitt mit einem Bohrerdurchmesser, wobei der Bohrerdurchmesser kleiner ist als der Einspanndurchmesser. Das Bohrwerkzeug umfasst weiter mindestens einen Fluidkanal, welcher sich mindestens teilweise durch den Einspannabschnitt hindurch erstreckt und entlang der Mittelachse vom Einspannabschnitt her gesehen vor dem Bohrerabschnitt mit mindestens einer Austrittsöffnung heraustritt, wobei ein Fluid, wie ein Kühlmittel oder ein Schmiermittel, über die Austrittsöffnung aus dem Fluidkanal herausführbar ist. Die Austrittsöffnung liegt vorzugsweise zwischen Einspannabschnitt und Bohrerabschnitt. Das Fluid kann somit entlang der Mittelachse aus dem Bohrwerkzeug geführt werden und trifft von hinten auf die Schneidstelle auf, womit die Zufuhr verbessert wird.

Der mindestens eine Fluidkanal verläuft vorzugsweise parallel und/oder beabstandet zur Mittelachse.

Vorzugsweise ist zwischen dem Einspannabschnitt und dem Bohrerabschnitt ein Übergangsbereich angeordnet, über welchen der Durchmesser vom Einspannabschnitt zum Bohrerabschnitt verringert wird, wobei die besagte Austrittsöffnung im Übergangsbereich liegt. Der Einspannabschnitt umfasst auf der dem Übergangsbereich gegenüberliegenden Seite vorzugsweise eine Stirnfläche, durch welche der Fluidkanal mit einer Eintrittsöffnung in den Einspannabschnitt hereintritt.

Pro Fluidkanal ist vorzugweise je eine Austrittsöffnung vorgesehen. Alternativ können pro Fluidkanal mehrere Austrittsöffnungen vorgesehen sein.

Der mindestens eine Fluidkanal ist durch Seitenwände begrenzt, wobei eine innere Seitenwand, welche der Mittelachse zugewandt ist, um die Mittelachse gekrümmt ausgebildet. Bei der Rotation des Bohrwerkzeuges ist diese Krümmung vorteilhaft für die Verteilung des Fluids im Fluidkanal.

Vorzugsweise weist der Fluidkanal eine Querschnittsform auf, welche in einer Ebene senkrecht zur Mittelachse gesehen im Wesentlichen einem um die Mittelachse gebogenen Trapez entspricht, wobei die Grundseiten des Trapezes bezüglich der Mittelachse gekrümmt ausgebildet sind und die innere und eine äussere Wand definieren, und wobei sich die Schenkel bezüglich der Mittelachse im wesentlichen radial nach aussen erstrecken und Seitenwände definieren. Alternativ kann der Fluidkanal auch eine halbrunde Querschnittsform aufweisen.

Vorzugsweise liegt die Gesamtquerschnittsfläche aller Fluidkanäle im Bereich von 20% bis 40%, insbesondere im Bereich von 25% bis 35%, besonders bevorzugt im Bereich von 28% bis 32% der Querschnittsfläche des Einspannabschnittes liegt.

Vorzugsweise sind mindestens zwei, besonders bevorzugt drei oder vier oder fünf oder sechs, Fluidkanäle in regelmässigen Winkelabschnitten zueinander angeordnet sind.

Vorzugsweise sind die Austrittsöffnungen derart angeordnet, dass diese mit der zur Mittelachse näherliegenden Seitenwand einen Abstand von mindestens dem halben Bohrerdurchmesser aufweisen.

Der Bohrerdurchmesser liegt vorzugsweise im Bereich von 0.01 mm bis 2 mm, insbesondere im Bereich von 0.05 mm bis 1.2 mm.

Zwischen dem Einspannabschnitt und dem Bohrerabschnitt ist vorzugsweise ein Verbindungsabschnitt angeordnet, welcher mindestens über einen Teilbereich einen Verjüngungsdurchmesser aufweist, der kleiner ist als Bohrerdurchmesser, wobei dieser Teilbereich einen flexiblen Abschnitt bereitstellt, welcher eine Auslenkung des Bohrerabschnittes seitlich zur Mittelachse bzw. seitlich zum Einspannabschnitt ermöglicht. Durch die Bereitstellung des Verbindungsabschnittes, welcher bezüglich dem Bohrerabschnitt verjüngt ausgebildet ist, wird das Bohrwerkzeug noch robuster ausgebildet, weil die Ermöglichung einer seitlichen Auslenkung ein Brechen des Bohrers verhindert, wodurch der Bohrprozess sicherer wird.

Vorzugsweise weist der Verbindungsabschnitt die Gestalt eines Zylinders auf und erstreckt sich entlang der Mittelachse zylindrisch mit einem Zylinderdurchmesser, wobei der Zylinderdurchmesser dem besagten Verjüngungsdurchmesser entspricht.

Alternativ weist der Verbindungsabschnitt die Gestalt mindestens eines Konus auf und erstreckt sich entlang der Mittelachse konisch, wobei der minimale Durchmesser des Konus dem besagten Verjüngungsdurchmesser entspricht.

Vorzugsweise verjüngt sich der Konus in der Richtung vom Bohrerabschnitt zum Einspannabschnitt kontinuierlich. Alternativ verjüngt sich der Konus in der Richtung vom Einspannabschnitt zum Bohrerabschnitt kontinuierlich. Auch ist es denkbar, dass zwei Konen angeordnet sind, welche sich in diametralerer Richtung verjüngen.

Vorzugsweise schliesst sich dem Konus ein Zylinderbereich mit konstantem Durchmesser an, wobei der Durchmesser des Zylinderbereiches gleich dem besagten Verjüngungsdurchmesser des besagten Teilbereiches ist und wobei der Zylinderbereich sich an der Seite am Konus anschliesst, welche den Verjüngungsdurchmesser aufweist.

Vorzugsweise weist der Konus einen Winkel zwischen der Mantellinie und der Mittelachse von 0.3° bis 3°, insbesondere von 0.5° bis 2°, besonders bevorzugt von 0.6° bis 1.7° auf.

Der Verjüngungsdurchmesser liegt bevorzugt im Bereich von 70% bis 90%, insbesondere im Bereich von 75% bis 85%, besonders bevorzugt bei 80%, des Bohrerdurchmessers.

Der Bohrerdurchmesser liegt bevorzugt im Bereich von 0.01 mm bis 2 mm, insbesondere im Bereich von 0.05 mm bis 1.2 mm.

Bevorzugt weist der Verbindungsabschnitt eine Länge auf, welche kleiner, gleich oder grösser ist als die Länge des Bohrerabschnittes, wobei die Länge des Verbindungsabschnittes vorzugsweise um einen Faktor im Bereich von 0.5 bis 5, insbesondere im Bereich 1 bis 4, besonders bevorzugt um einen Faktor im Bereich 1 bis 3 , grösser als die Länge des Bohrerabschnittes ist. Alternativ kann der Faktor auch im Bereich von 1.5 bis 3 bzw. 4 bzw. 5 liegen.

Vorzugsweise weist die Oberfläche des Verbindungsabschnittes eine Oberflächenrauheit im Bereich von 0.01 µm bis 0.1 µm, insbesondere im Bereich von 0.025 µm bis 0.05 µm, auf.

Der Einspannabschnitt weist vorzugsweise die Gestalt eines Zylinders mit konstantem Einspanndurchmesser auf, wobei der Einspanndurchmesser grösser ist als der Verjüngungsdurchmesser des Verbindungsabschnittes, und/oder wobei der Einspanndurchmesser grösser ist als der Bohrerdurchmesser.

Vorzugsweise ist die Länge des Einspannabschnittes um einen Faktor im Bereich von 0.5 bis 10, insbesondere im Bereich 0.7 bis 4, besonders bevorzugt um einen Faktor 0.7 bis 3, grösser als die Summe der Länge des Bohrerabschnittes und der Länge des Verbindungsabschnittes.

Vorzugsweise schliesst sich der Verbindungsabschnitt über einen ersten Übergangsbereich an den Bohrerabschnitt an, wobei der erste Übergangsbereich zwischen dem Bohrerabschnitt und dem Verbindungsabschnitt konisch ausgebildet ist und sich vom Bohrerdurchmesser über eine Übergangslänge kontinuierlich verringert, oder wobei der erste Übergangsbereich gerundet ausgebildet ist, oder wobei der erste Übergangsbereich abschnittsweise gerundet und abschnittsweise konisch ausgebildet ist.

Vorzugsweise schliesst sich der Einspannabschnitt über einen zweiten Übergangsbereich an den Verbindungsabschnitt an, wobei der zweite Übergangsbereich konisch ausgebildet ist, wobei sich der Durchmesser des zweiten Übergangsbereichs vom Durchmesser des Verbindungsabschnittes über eine Übergangslänge kontinuierlich auf den Einspanndurchmesser vergrössert, oder wobei der zweite Übergangsbereich gerundet ausgebildet ist, oder wobei der zweite Übergangsbereich abschnittsweise gerundet und abschnittsweise konisch ausgebildet ist.

Alternativ ist der erste Übergangsbereich als Stufe ausgebildet, wobei sich der Durchmesser direkt vom Bohrerdurchmesser auf den Durchmesser des Verbindungsabschnittes verringert. Alternativ kann der zweite Übergangsbereich als Stufe ausgebildet sein, wobei sich der Durchmesser direkt vom Einspanndurchmesser auf den Durchmesser des Verbindungsabschnittes verringert.

Der Verbindungsabschnitt schliesst sich vorzugsweise direkt und unmittelbar an den Einspannabschnitt an. Der Verbindungsabschnitt schliesst sich vorzugsweise direkt und unmittelbar an den Bohrerabschnitt an, wobei zwischen Verbindungsabschnitt und Einspannabschnitt bzw. Bohrerabschnitt gegebenenfalls ein Übergangsbereich, welcher Teil des Verbindungsabschnitts ist, vorgesehen ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine Vorderansicht des Bohrwerkzeuges gemäss einer ersten Ausführungsform;
- Fig. 1b: eine Seitenansicht des Bohrwerkzeuges gemäss der ersten Ausführungsform nach der Figur 1 a;
- Fig. 2a: eine Vorderansicht des Bohrwerkzeuges gemäss einer zweiten Ausführungsform;
- Fig. 2b: eine Seitenansicht des Bohrwerkzeuges gemäss der zweiten Ausführungsform nach der Figur 2a;
- Fig. 3a: eine Vorderansicht des Bohrwerkzeuges gemäss einer dritten Ausführungsform;
- Fig. 3b: eine Seitenansicht des Bohrwerkzeuges gemäss der ersten Ausführungsform nach der Figur 3a;
- Fig. 4a: eine Vorderansicht des Bohrwerkzeuges gemäss einer ersten Ausführungsform; und
- Fig. 4b: eine Seitenansicht des Bohrwerkzeuges gemäss der ersten Ausführungsform nach der Figur 4a.

### BESCHREIBUNG BEVORZUGTER AUSFÜHRUNGSFORMEN

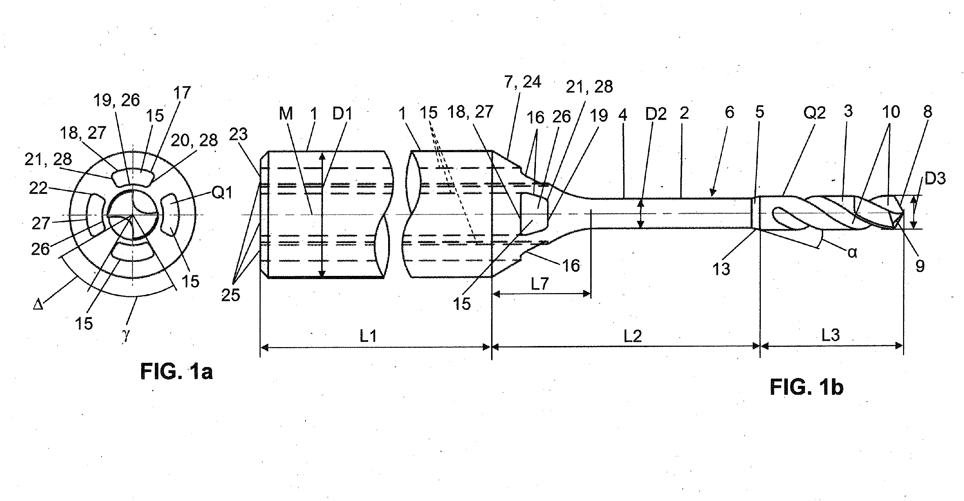

In der Figur 1 wird ein Bohrwerkzeug mit einem integrierten Fluidkanal 15 zur Zuführung eines Kühlmittels oder eines Schmiermittels zum Bohrwerkzeug gezeigt.

Das Bohrwerkzeug dient zur Herstellung einer Bohrung und umfasst im Wesentlichen einen Einspannabschnitt 1 und einen Bohrerabschnitt 3, welcher sich dem Einspannabschnitt 1 anschliesst. In dieser Ausführungsform ist zudem ein optionaler Verbindungsabschnitt 2, welcher zwischen dem Einspannabschnitt 1 und dem Bohrerabschnitt 3 liegt und somit den Einspannabschnitt 1 und den Bohrerabschnitt 3 verbindet, angeordnet. Über den Einspannabschnitt 1 kann das Bohrwerkzeug in eine Werkzeugmaschine, wie ein Bearbeitungszentrum oder eine Ständerbohrmaschine eingespannt werden. Der Bohrerabschnitt 3 dient im Wesentlichen der Herstellung der Bohrung.

Der Einspannabschnitt 1 definiert eine Mittelachse M und weist einen Einspanndurchmesser D1 auf. Der Bohrerabschnitt 3 schliesst sich dem Einspannabschnitt entweder direkt oder über einen Verbindungsabschnitt 2 in Richtung der Mittelachse M an. Der Bohrerabschnitt3 weist einen Bohrerdurchmesser D3 auf, welcher kleiner ist als der Einspanndurchmesser D1. Das Bohrwerkzeug umfasst weiter mindestens einen Fluidkanal 15, welcher sich durch den Einspannabschnitt 1 hindurch erstreckt. Vom Einspannabschnitt 1 her gesehen tritt der Fluidkanal 15 mit mindestens einer Austrittsöffnung 16 vor dem Bohrerabschnitt 3 heraus. Demnach liegt die Austrittsöffnung in Richtung der Mittelachse M vom Einspannabschnitt 1 her gesehen vor dem Bohrerabschnitt 3. Folglich erstreckt sich der Fluidkanal 15 nicht durch das gesamte Werkzeug hindurch, was eine unnötige Querschnittsschwächung verhindert. Aus der mindestens einen Austrittsöffnung 16 ist das Fluid aus dem Fluidkanal 15 herausführbar und kann entlang der Mittelachse M dem Bohrerabschnitt 3 zugeführt werden.

Durch die Anordnung der Austrittsöffnung hinter dem Bohrerabschnitt 3 bzw. zwischen dem Einspanabschnitt 1 und dem Bohrerabschnitt 3 kann sichergestellt werden, dass das Fluid prozesssicher dem Bohrerabschnitt 3 zuführbar ist und somit den Bohrprozess verbessert. Gerade bei Bohrwerkzeugen mit kleinen Durchmessern im Bereich von 0.01 mm bis 2 mm hat sich diese Anordnung als äusserst vorteilhaft erwiesen.

Unter einem Fluid wird in diesem Zusammenhang ein Kühlmittel, wie eine Kühlemulsion oder Druckluft, oder ein Schmiermittel, wie ein Schmieröl, verstanden. Das Fluid kann flüssig oder gasförmig sein.

In der vorliegenden Ausführungsform erstreckt sich der Fluidkanal 15 parallel zur Mittelachse M und verläuft vorzugsweise im wesentlichen entlang einer Gerade. Letzteres hat den Vorteil, dass keine durch eine Umlenkung vorhandene Strömungsverluste entstehen können. Weiter verläuft der Fluidkanal 15 seitlich beabstandet zur Mittelachse M.

Zwischen dem Einspannabschnitt 1 und dem Bohrerabschnitt 3 liegt ein Übergangsbereich 7, über welchen sich der Durchmesser vom Einspannabschnitt 1 zum Bohrerabschnitt 3 verringert. Die besagte Austrittsöffnung 16 liegt hier in diesem Übergangsbereich 7 und tritt über die Oberfläche 24 des Übergangsbereiches 7 aus dem Bohrwerkzeug heraus. Der Übergangsbereich 7 kann gerundet und/oder konisch ausgebildet sein. Auch die Ausbildung als Stufe oder Schulter wäre denkbar. Die Gestalt des Übergangsbereiches 7 wird untenstehend noch detaillierter erläutert.

Dem Übergangsbereich 7 kann sich der Bohrerabschnitt 3 direkt und unmittelbar anschliessen, womit der Übergangsbereich 7 einen Teil des Bohrerabschnittes 3 sein kann. Alternativ kann zwischen dem Einspannabschnitt 1 und dem Bohrerabschnitt 3 auch ein Verbindungsabschnitt 2 angeordnet sein, welcher den Einspannabschnitt 1 mit dem Bohrerabschnitt 3 verbindet, wobei hier dann der Übergangsbereich 7 einen Teil des Verbindungsabschnittes 2 darstellt.

Gegenüberliegend vom Übergangsbereich 7 umfasst der Einspannabschnitt 1 eine senkrecht zur Mittelachse M verlaufende Stirnfläche 23, durch welche die Fluidkanäle 15 in den Einspannabschnitt 1 mit einer Eintrittsöffnung 25 hereintreten. Folglich erstreckt sich der Fluidkanal 15 von der Eintrittsöffnung 25 bis hin zur Austrittsöffnung 16. Der Fluidkanal 15 selbst besteht aus Seitenwänden 26, welche den Fluidkanal 15 begrenzen, wobei sich die Seitenwände 26 von der Eintrittsöffnung 25 bis zur Austrittsöffnung 16 erstrecken. Vorzugsweise ist der Übergang zwischen den Seitenwände mit einer Rundung 22 ausgebildet.

Vorzugsweise wird pro Fluidkanal 15 je eine Austrittsöffnung 16 und je eine Eintrittsöffnung 25 vorgesehen. Alternativ können auch pro Fluidkanal 15 mehrere Austrittsöffnungen 16 vorgesehen sein.

In den Figuren 1a und 1b kann auch erkannt werden, dass vorzugsweise mindestens zwei, hier vier, Fluidkanäle 15 angeordnet sind. Die Fluidkanäle 15 sind bezüglich der Mittelachse M in regelmässigen Winkelabständen Δ zueinander angeordnet. Vorteilhafterweise sind die Fluidkanäle 15, insbesondere bezüglich der Querschnittsform, identisch zueinander ausgebildet. Durch die Anordnung in regelmässigen Abständen und die identische Ausbildung der Kühlmittelkanäle 15 kann ein bezüglich der Mittelachse M ausgewuchtetes Bohrwerkzeug bereitgestellt werden.

Vorzugsweise erstrecken sich die Querschnitte der Fluidkanäle 15 jeweils über einen Winkelbereich γ. Vorzugsweise ist der Winkel γ jeweils 60° und der Winkel Δ 30°. Andere Winkel sind auch denkbar.

Der Fluidkanal 15 kann grundsätzlich eine beliebige Querschnittsform aufweisen. Die Querschnittsform ist die Gestalt der Öffnung in einer Ebene senkrecht zur Mittelachse M gesehen, was bei den Figuren 1a, 2a, 3a und 4a im Wesentlichen der Zeichnungsblattebene entspricht.

Vorzugsweise ist die innere Wand 26 des Fluidkanals, welche zur Mittelachse M zugewandt ist, um die Mittelachse M gekrümmt ausgebildet, was bezüglich der Fluidverteilung bei rotierendem Bohrwerkzeug vorteilhaft ist.

In der Figur 1a wird eine bevorzugte Querschnittsform gezeigt, welche im Wesentlichen der Form eines um die Mittelachse M gebogenen Trapezes entspricht. Die Grundseiten 18, 19 des Trapezes sind dabei bezüglich der Mittelachse M gekrümmt ausgebildet und erstrecken sich vorzugsweise mit einem konstanten Radius um die Mittelachse M. Die Schenkel 20, 21, über welche die Grundseiten 18, 19 miteinander in Kontakt stehen, erstrecken sich bezüglich der Mittelachse M im Wesentlichen radial nach aussen. Bezüglich des Fluidkanals 15 kann somit gesagt werden, dass dieser im Wesentlichen aus vier Wänden 26, 27, 28 besteht, nämlich aus der gekrümmten inneren Wand 26, aus der äusseren Wand 27, welche durch die Grundseiten 18, 19 definiert sind, und aus zwei die Wände 26, 27 verbindende Seitenwände 28, welche durch die Schenkel 20, 21 definiert sind.

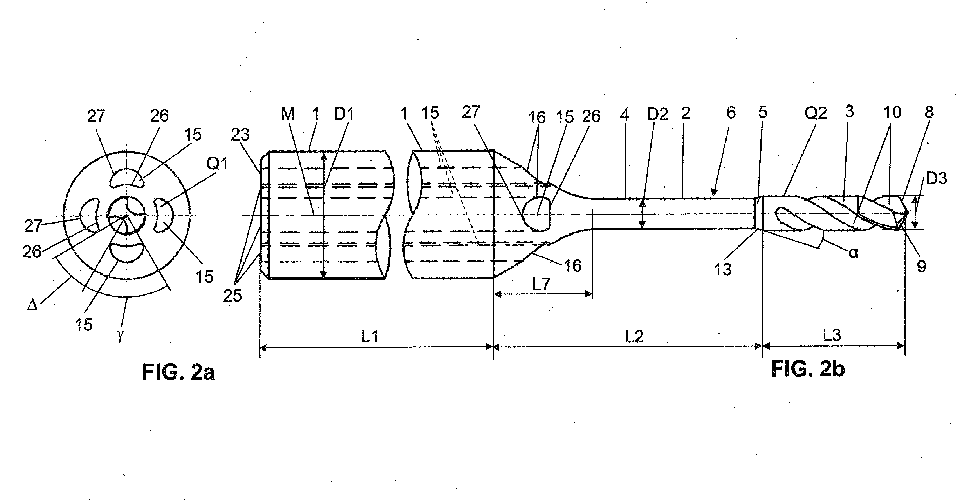

Eine alternative Querschnittsform wird in der Fig. 2a gezeigt. Hier ist die Querschnittsform halbrund ausgebildet, wobei sich von einem Ende der inneren Seitenwand 26 die äussere Seitenwand 27 mit einem anderen Radius zum anderen Ende der inneren Seitenwand 26 erstreckt.

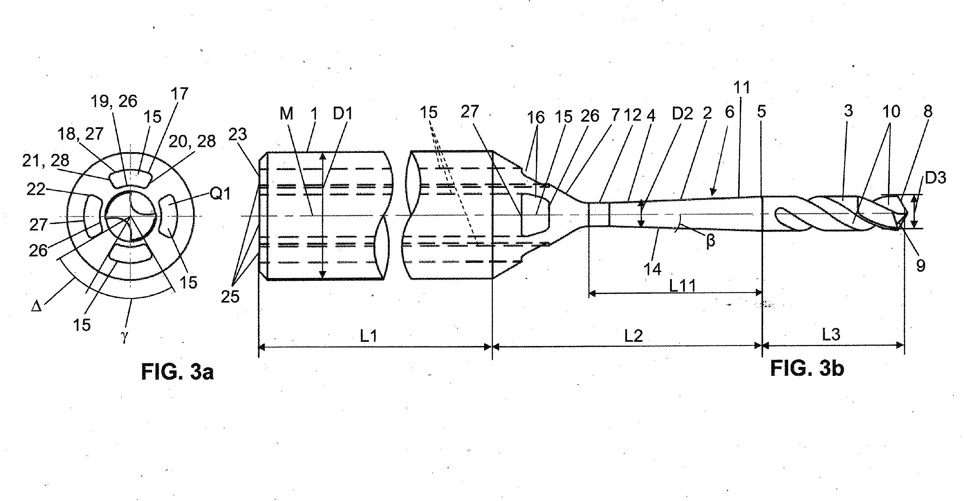

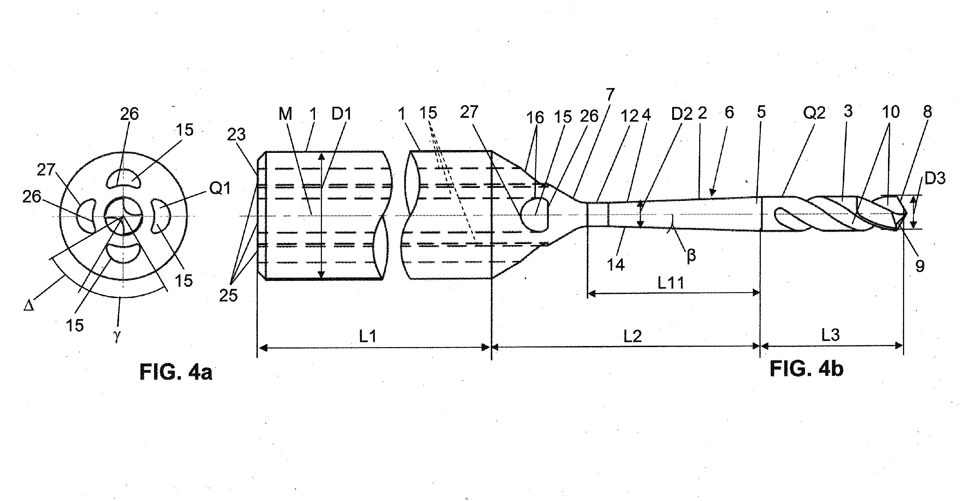

Die in den Figur 3a bis 3b gezeigte dritte Ausführungsform umfasst wiederum die Querschnittsform der Fluidkanäle 15 nach den Figuren 1a und 1b, wobei hier der Übergangsbereich 2 gemäss untenstehender Beschreibung anders ausgebildet ist. Gleiches gilt für die Figuren 4a und 4b, welche die vierte Ausführungsform zeigen, wobei hier der Querschnitt der Fluidkanäle 15 gemäss den Figuren 2a und 2b ausgebildet ist.

Bezüglich allen Ausführungsformen kann gesagt werden, dass jeder der Fluidkanäle 15 eine Querschnittsfläche Q1 aufweist. Die Querschnittsfläche Q1 entspricht dabei der Fläche des Fluidkanals 15 in einer Ebene senkrecht zur Mittelachse M. Die Gesamtquerschnittsfläche aller Fluidkanäle 15 entspricht demnach der Summe jeder einzelnen Querschnittsfläche Q1. Im vorliegenden Fall entspricht die Gesamtquerschnittsfläche somit der vierfachen Querschnittsfläche Q1. Weiter weist der Einspannabschnitt 1 eine Querschnittsfläche Q2 auf, welche sich aus dem Einspanndurchmesser D1 ergibt. Die Querschnittsfläche Q2 entspricht folglich dem halben Bohrerdurchmesser im Quadrat multipliziert mit Pi (D1*0.5^{∧}2*Pi). Vorzugsweise liegt die Gesamtquerschnittsfläche Q aller Fluidkanäle 15 im Bereich von 20% bis 40%, insbesondere im Bereich von 25% bis 35%, besonders bevorzugt im Bereich von 28% bis 32% der Querschnittsfläche Q2 des Einspannabschnittes liegt.

Zudem sind die Austrittsöffnungen 16 bei allen Ausführungsformen von vorne her in Richtung der Mittelachse M gesehen bevorzugt derart angeordnet, dass diese mit der inneren Seitenwand 27 bzw. der Grundseite 19 einem Abstand von mindestens dem halben Bohrerdurchmesser D3 aufweisen. Vorzugsweise ist die innere Seitenwand 27 aber mit einem etwas grösseren Abstand zur Mittelachse angeordnet. Somit kann das Fluid parallel zur Mittelachse M entlang der Aussenseite des Bohrerabschnittes 3 zu dessen Schneiden geführt werden.

Das hierin beschriebene Bohrwerkzeug wird vorzugsweise aus einem Rohling hergestellt. Der Rohling wird dabei vorzugsweise mit einem Extrusionsverfahren hergestellt, wobei während der Extrusion des Rohlings die Fluidkänale 15 geformt werden. Anschliessend werden Einspannabschnitt 1, gegebenenfalls Verbindungsabschnitt 2 und Bohrerabschnitt 3 mit einem Schleifverfahren hergestellt.

Die Figuren 1b und 2b zeigen zwei unterschiedliche Ausführungsformen eines Bohrwerkzeuges zur Herstellung von Bohrungen mit einem kleinen Durchmesser im Bereich von 0.01 mm bis 2.0 mm, insbesondere im Bereich von 0.05 mm bis 2 mm.

Zusätzlich zu den unten beschriebenen Merkmalen weist die erste Ausführungsform nach der Figur 1b mindestens einen der oben beschriebenen Fluidkanäle 15 mit dem trapezförmigen Querschnitt auf und die zweite Ausführungsform nach der Figur 2b weist mindestens einen der oben beschriebene Fluidkanäle 15 mit dem halbrunden Querschnitt auf. Alle oben beschriebenen Merkmale zu den Fluidkanälen 15 sind auf die beiden Ausführungsformen nach den Figuren 1b und 2b gleichermassen anwendbar.

Abgesehen von der unterschiedlichen Ausbildung der Fluidkanäle 15 weisen beide Bohrwerkzeuge der ersten Ausführungsform nach Figur 1b und zweiten Ausführungsform nach Figur 2b gleiche Eigenschaften auf. Das Bohrwerkzeug dient zur Herstellung einer Bohrung und umfasst im Wesentlichen einen Einspannabschnitt 1, einen Verbindungsabschnitt 2 und einen Bohrerabschnitt 3. Der Verbindungsabschnitt 2 liegt zwischen dem Einspannabschnitt 1 und dem Bohrerabschnitt 3 und verbindet somit den Einspannabschnitt 1 und den Bohrerabschnitt 3. Über den Einspannabschnitt 1 kann das Bohrwerkzeug in eine Werkzeugmaschine, wie ein Bearbeitungszentrum oder eine Ständerbohrmaschine eingespannt werden. Der Bohrerabschnitt 3 dient im Wesentlichen der Herstellung der Bohrung.

Mit anderen Worten kann auch gesagt werden, dass entlang der Mittelachse M gesehen, der Verbindungsabschnitt 2 sich dem Einspannabschnitt 1 anschliesst und der Bohrerabschnitt 3 sich dem Verbindungsabschnitt 2 ebenfalls in Richtung der Mittelachse M gesehen anschliesst.

Der Einspannabschnitt 1 weist einen Einspanndurchmesser D1 und eine Länge L1 auf, der Verbindungsabschnitt 2 weist einen Durchmesser D2 und eine Länge L2 auf und der Bohrerabschnitt 3 weist einen Bohrerdurchmesser D3 und eine Länge L3 auf. Der Bohrerdurchmesser D3 entspricht im Wesentlichen dem Nenndurchmesser des Bohrers und der herzustellenden Bohrung.

Der Verbindungsabschnitt 2 weist mindestens über einen Teilbereich 4 bzw. über seine gesamte Länge einen Verjüngungsdurchmesser D2 auf, welcher kleiner ist als der Bohrerdurchmesser D3. Dadurch kann zwischen dem Bohrerabschnitt 3 und dem Einspannabschnitt 1 eine Zone geschaffen werden, welche dem Bohrwerkzeug eine bezüglich seitlich zur Mittelachse M auftretende Belastungen eine grössere Flexibilität verleiht. Mit anderen Worten kann gesagt werden, dass bezüglich des Bohrerabschnittes 3 durch den sich verjüngenden Verbindungsabschnitt 2 eine grössere Flexibilität zwischen Bohrerabschnitt 3 und Einspannabschnitt 1 bereitgestellt werden kann, wodurch der Bohrerabschnitt 3 bezüglich einer Querkraft, welche winklig zur Mittelachse M auftreten kann, ein Auslenkung zur Mittelachse M erfahren kann, ohne dass das Bohrerwerkzeug bricht. Die Querkraft kann beispielsweise durch exzentrisches Auftreffen des Bohrwerkzeuges auf eine Zentrierbohrung oder beim Durchbohren einer Zone mit Verunreinigungen im Material auftreten.

In der ersten Ausführungsform weist der Verbindungsabschnitt 2 die Gestalt eines Zylinders auf und erstreckt sich entlang der Mittelachse M über mindestens einen Teilbereich 4 zylindrisch mit einem Zylinderdurchmesser D2. Der Zylinderdurchmesser D2 entspricht somit dem Verjüngungsdurchmesser des Verbindungsabschnittes 2 und weist im Wesentlichen über die gesamte Länge des Verbindungsabschnittes 2 bzw. über die Länge des Teilbereiches 4 einen konstanten Durchmesser auf. In den Übergangsbereichen 5, 7 zwischen dem Verbindungsabschnitt 2 und dem Einspannabschnitt 1 bzw. den Bohrerabschnitt 3 kann der Durchmesser der entsprechenden Bereichen variieren.

Der Verjüngungsdurchmesser D2 des Verbindungsabschnittes 2 liegt im Bereich von 70% bis 90%, insbesondere im Bereich von 75% bis 85%, besonders bevorzugt bei 80%, des Bohrerdurchmessers D3. Der Bohrerabschnitt D3 selbst weist vorzugweise einen Bohrerdurchmesser D3 im Bereich von 0.01 mm bis 2 mm, insbesondere im Bereich von 0.05 mm bis 1.2 mm auf. Bei einem Bohrer mit einem Bohrerdurchmesser von 0.5 mm liegt also der Durchmesser D2 des Verbindungsabschnittes im Bereich von 0.35 mm bis 0.45 mm, insbesondere im Bereich von 0.375 mm bis 0.425, besonders bevorzugt bei 0.4 mm.

Der konstante Verjüngungsdurchmesser D2 erstreckt sich über den längeren bzw. grösseren Bereich der Länge L2 des Verbindungsabschnittes als die Übergangsbereiche 5, 7, welche in diesem Zusammenhang als Teile des Verbindungsabschnittes 2 angesehen werden können. Folglich kann gesagt werden, dass sich der Verbindungsabschnitt 2 aus den beiden Übergangsbereichen 5, 7 und dem Teilbereich 4 zusammensetzt. Der Teilbereich 4 weist somit entlang der Mittelachse M gesehen eine grössere Länge auf als die beiden Übergangsbereiche 5, 7. Wenn die Übergangsbereiche 5, 7 nicht vorhanden sind, so entspricht die Länge des Teilbereiches 4 im Wesentlichen der Länge des Verbindungsabschnittes 2.

Der Verbindungsabschnitt 2 weist eine Länge L2 auf, welche grösser ist als die Länge L3 des Bohrerabschnittes 3. Zudem ist die Länge L2 vorzugsweise kürzer als die Länge L1 des Einspannabschnittes. Die Länge L2 des Verbindungsabschnittes 2 definiert sich als die Länge über den gesamten Verbindungsabschnitt, einschliesslich der Längen der Übergangsbereiche 5, 7. Bezüglich der Längenverhältnisse ist im Wesentlichen das Verhältnis zwischen der Länge des Bohrerabschnittes L3 und der Länge des Verbindungsabschnittes L2 relevant. Vorzugsweise ist die Länge L2 um einen Faktor im Bereich von 0.5 bis 5, insbesondere im Bereich 1 bis 4, besonders bevorzugt um einen Faktor 1 bis 3, grösser als die Länge L3. Alternativ kann der Faktor auch im Bereich von 1.5 bis 3 bzw. 4 bzw. 5 liegen.

Vorzugsweise ist die Länge L1 um einen Faktor im Bereich von 0.5 bis 10, insbesondere im Bereich 0.7 bis 4, besonders bevorzugt um einen Faktor 0.7 bis 3, grösser als die Summe der Länge L3 des Bohrerabschnittes 3 und der Länge L2 des Verbindungsabschnittes 2.

Der Einspannabschnitt 1 weist hier die Gestalt eines Zylinders mit konstantem Einspanndurchmesser D1 auf. Der Einspanndurchmesser D1 weist ein Mass auf, welches grösser ist als der Verjüngungsdurchmesser D2 des Verbindungsabschnittes 2, und/oder grösser ist als der Bohrerdurchmesser D3. Der Einspanndurchmesser D1 weist üblicherweise ein Mass auf, dass der Einspannabschnitt 1 eine feste Basis für den Verbindungsabschnitt 2 bzw. den Bohrerabschnitt 3 bildet, so dass der Bohrerabschnitt 3 aufgrund der oben beschriebenen Ausbildung des Verbindungsabschnittes 2 über den Verbindungsabschnitt 2 seitlich zur Mittelachse M bei eingespanntem Einspannabschnitt 1 ausgelenkt werden kann. Das Mass des Einspanndurchmessers D1 ist im Wesentlichen vom Spannfutter des Bearbeitungszentrums definiert und kann im Bereich von 2 mm bis 10 mm liegen. Vorzugsweise liegt der Einspanndurchmesser D1 bei einem kleinen Bohrerdurchmesser D3, also in der unteren Hälfte des oben genannten Bereiches, eher im Bereich von 2 mm bis 8 mm und bei einem grösseren Bohrerdurchmesser D3, also in der oberen Hälfte des oben genannten Bereiches, eher bei 4 bis 10 mm.

Zwischen dem Bohrerabschnitt 3 und dem Verbindungsabschnitt 2 ist hier ein erster Übergangsbereich 5 angeordnet, welcher konisch ausgebildet ist. Der Durchmesser des ersten Übergangsbereichs 5 verringert sich hier also kontinuierlich vom Bohrerdurchmesser D3 auf den Verjüngungsdurchmesser D2 des Verbindungsabschnittes 2. Der Konus weist vorzugsweise einen Winkel α zwischen der Mantellinie 13 des Konus und der Mittelachse M von 2° bis 8°, insbesondere von 3° bis 7°, besonders bevorzugt von 5° auf. Alternativ kann der erste Übergangsbereich 5 auch konkav gerundet ausgebildet sein.

Weiter wäre es auch denkbar, den Übergangsbereich 5 als konkave oder konvexe Rundung gerundet auszubilden. Alternativ kann der Übergangsbereich auch aus einer Kombination von konvexer Rundung im Bereich des Bohrerabschnittes 3 und/oder konkaver Rundung im Bereich des Verbindungsabschnittes 2 ausgebildet sein, wobei dazwischen auch noch ein konischer Abschnitt angeordnet werden könnte.

Vorteilhaft an derartig ausgebildeten Übergängen ist, dass aufgrund der Kerbwirkung auftretende Spannungsspitzen reduzierbar sind.

In einer weiteren alternativen Ausführungsform kann der erste Übergangsbereich 5 als Stufe oder Schulter, welche rechtwinklig zur Mittelachse M verlaufen, ausgebildet sein, wobei sich der Durchmesser vom Bohrerdurchmesser D3 direkt auf den Verjüngungsdurchmesser D2 des Verbindungsabschnittes 2 verringert. Der Übergang besteht somit aus einer Wandung, welche senkrecht zur Mittelachse M verläuft und vom Verbindungsabschnitt 2 in Richtung der Mittelachse M gesehen die Gestalt eines Kreisringes aufweist.

Zwischen dem Verbindungsabschnitt 2 und dem Einspannabschnitt 1 ist hier ein zweiter Übergangsbereich 7 angeordnet. Der zweite Übergangsbereich 7 ist hier in einem sich dem Verbindungsabschnitt 2 anschliessenden Bereich konkav gerundet ausgebildet und verläuft dann konusartig zum Einspannabschnitt. Alternativ kann der zweite Übergangsbereich 7 auch gemäss der obigen Beschreibung des ersten Übergangsbereichs 5 ausgebildet sein. Es ist also denkbar, den zweiten Übergangsbereich 7 gerundet und/oder konisch oder stufenförmig auszubilden.

Bezüglich der Reihenfolge der einzelnen Abschnitte des Bohrwerkzeuges kann von der Figur 1 entnommen werden, dass sich der Verbindungsabschnitt 2 unmittelbar und direkt an den Einspannabschnitt 1 anschliesst. Zwischen den beiden Abschnitten liegt hier noch der zweite Übergangsbereich 7, welcher als Teil des Verbindungsabschnittes 2 angesehen werden kann. Auf der dem Einspannabschnitt 1 gegenüberliegenden Seite schliesst sich dem Verbindungsabschnitt 2 unmittelbar und direkt der Bohrerabschnitt 3 an. Zwischen dem Bohrerabschnitt 3 und dem Verbindungsabschnitt 2 liegt hier noch der erste Übergangsbereich 5, welcher als Teil des Verbindungsabschnittes 2 angesehen werden kann. Folglich liegt der Verbindungsabschnitt 2, welcher die Flexibilität des Bohrwerkzeuges bereitstellt, zwischen dem Einspannabschnitt 1 und dem Bohrerabschnitt 3. Beim fest eingespannten Einspannabschnitt 1 kann sich also der Bohrerabschnitt 3 über den zum Bohrerabschnitt 3 verjüngten Verbindungsabschnitt 2 seitlich zum fest eingespannten Einspannabschnitt 1 auslenken.

Vorzugsweise weist die Oberfläche 6 des Verbindungsabschnittes 2 eine Oberflächenrauheit im Bereich von 0.01 µm bis 0.1 µm, insbesondere im Bereich von 0.025 µm bis 0.05 µm, auf. Hierdurch kann die Kerbwirkung weiter reduziert werden.

Der Bohrerabschnitt 3 kann gemäss dem Stand der Technik ausgebildet sein und umfasst im Wesentlichen eine Bohrerspitze 8 mit Schneiden 9 und sich der Bohrerspitze anschliessende Spiralnuten 10. Die Spiralnuten 10 erstrecken sich über die wesentliche Länge des Bohrerabschnittes 3.

In den Figuren 1a und 2a wird das Bohrwerkzeug von vorne entlang der Mittelachse M gezeigt, wobei hier insbesondere die Schneiden 9 und die Spiralnuten 10 gut erkennbar sind.

Unter Bezugnahme zu den Figuren 3b und 4b werden nun noch die dritte und die vierte Ausführungsform des Bohrwerkzeuges erläutert.

Zusätzlich zu den unten beschriebenen Merkmalen weist die dritte Ausführungsform nach der Figur 3b mindestens einen der oben beschriebenen Fluidkanäle 15 mit dem trapezförmigen Querschnitt auf und die zweite Ausführungsform nach der Figur 4b weist mindestens einen der oben beschriebene Fluidkanäle 15 mit dem halbrunden Querschnitt auf. Alle oben beschriebenen Merkmale zu den Fluidkanälen 15 sind auf die beiden Ausführungsformen nach den Figuren 3b und 4b gleichermassen anwendbar.

Abgesehen von der unterschiedlichen Ausbildung der Fluidkanäle 15 weisen beide Bohrwerkzeuge der dritten Ausführungsform nach Figur 3b und vierten Ausführungsform nach Figur 4b gleiche Eigenschaften auf. Gleiche Teile sind dabei mit gleichen Bezugszeichen versehen.

Das Bohrwerkzeug gemäss der dritten und vierten Ausführungsform umfasst im Wesentlichen einen Einspannabschnitt 1, einen Verbindungsabschnitt 2 und einen Bohrerabschnitt 3. Der Verbindungsabschnitt 2 liegt zwischen dem Einspannabschnitt 1 und dem Bohrerabschnitt 3 und verbindet somit den Einspannabschnitt 1 und den Bohrerabschnitt 3. Über den Einspannabschnitt 1 kann das Bohrwerkzeug in eine Werkzeugmaschine, wie ein Bearbeitungszentrum oder eine Ständerbohrmaschine eingespannt werden. Der Bohrerabschnitt 3 dient im Wesentlichen der Herstellung der Bohrung.

Einspannabschnitt 1 und Bohrerabschnitt 3 weisen im Wesentlichen die gleichen Eigenschaften und Merkmale auf, wie die entsprechenden Abschnitte gemäss der ersten Ausführungsform, welche oben bereits detailliert erläutert wurde.

Der Verbindungsabschnitt 2 weist in der zweiten Ausführungsform die Form von mindestens einem Konus 11 auf und erstreckt sich entlang der Mittelachse M konisch. Über mindestens einen Teilbereich 4 weist der Verbindungsabschnitt 2 bzw. der Konus 11 einen Durchmesser D2 auf, welcher kleiner ist als der Bohrerdurchmesser D3. Der flexible Abschnitt, welcher eine Auslenkung des Bohrerabschnittes 3 seitlich zur Mittelachse M bzw. seitlich zum Einspannabschnitt 1 ermöglicht, wird hier also durch den Konus bereitgestellt. Der Konus 11 verkleinert sich mit seinem Durchmesser kontinuierlich auf den Verjüngungsdurchmesser D2. Der Verjüngungsdurchmesser D2 ist der kleinste Durchmesser. Folglich verjüngt sich der Durchmesser des Verbindungsabschnittes 2 sich also entlang der Mittelachse M bis der Konus 11 den Verjüngungsdurchmesser D2 erreicht hat.

In den vorliegenden Ausführungsformen verjüngt sich der Konus 11 entlang der Mittelachse M in Richtung vom Bohrerabschnitt 3 zum Einspannabschnitt 1 hin kontinuierlich. Der Verbindungsabschnitt 2 schliesst sich unmittelbar dem Bohrerabschnitt 3 an und der Konus 11 weist anfänglich den Durchmesser D3 auf. Anschliessend verjüngt sich der Konus 11 auf den Verjüngungsdurchmesser D2 zum Einspannabschnitt 1 hin. Dem eigentlichen Konus 11 kann sich dann optional noch ein als Zylinder ausgebildeter Abschnitt 12 anschliessen, welcher dann in einen zweiten Übergangsbereich 7 übergeht. Alternativ kann auch der Konus 11 direkt in den zweiten Übergangsbereich 7 übergehen. Der zweite Übergangsbereich 7, welcher gemäss Beschreibung zum ersten Ausführungsbeispiel ausgebildet sein kann, verbindet dann den Verbindungsabschnitt 2 mit dem Einspannabschnitt 1.

In anderen Ausführungsformen verjüngt sich der Konus des Verbindungsabschnittes 2 vom Einspannabschnitt 1 zum Bohrerabschnitt 3. Alternativ wäre es auch denkbar, dass zwei Konen 11 bezüglich der Mittelachse M hintereinander angeordnet sind.

Der Konus 11 weist vorzugsweise einen Winkel β zwischen der Mantellinie 14 und der Mittelachse M von 0.3° bis 3°, insbesondere von 0.5° bis 2°, besonders bevorzugt von 0.6° bis 1.7° auf.

Optional kann auch ein erster Übergangsbereich 5, der gemäss Beschreibung zum ersten Ausführungsbeispiel ausgebildet sein kann, zwischen dem Bohrerabschnitt 3 und dem Verbindungsabschnitt 4 angeordnet sein.

Die Durchmesserverhältnisse zwischen dem Einspanndurchmesser D1, dem Verjüngungsdurchmesser D2 des Verbindungsabschnittes 2 bzw. dem Bohrerdurchmesser D3 sind im wesentlichen gleich wie bei der ersten Ausführungsform. Gleiches gilt für die oben genannten Längenverhältnisse.

Der Konus 11 erstreckt sich über eine Länge L11. Über diese Länge L11 verändert sich der Durchmesser des Konus 11 kontinuierlich bis auf den Verjüngungsdurchmesser D2. Der Verbindungsabschnitt 2 weist hier ebenfalls eine Länge L2 auf, welche sich im Wesentlichen aus der Länge L11 des Konus 11 und gegebenenfalls aus der Länge des ersten Übergangsbereichs 5, des zweiten Übergangsbereichs 7 und des Zylinderbereiches 12 zusammensetzt. Die Länge L11 des Konus 11 ist vorzugsweise länger als die Summe der Längen des ersten Übergangsbereichs 5, des zweiten Übergangsbereichs 7 und des Zylinderbereiches 12.

Die Längenverhältnisse zwischen der Länge L3 des Bohrerabschnittes und der Länge L2 des Verbindungsabschnittes 2 sind im Wesentlichen gleich wie in der ersten bzw. zweiten Ausführungsform.

Auch weist der Konus 11 bezüglich Oberflächenrauheit gleiche Eigenschaften wie die erste bzw. die zweite Ausführungsform auf.

Alle Ausführungsformen des Bohrerwerkzeuges sind vorzugsweise aus einem Hartmetall oder Keramik und werden durch ein Schleifverfahren hergestellt.

### BEZUGSZEICHENLISTE

- 1: Einspannabschnitt
- 2: Verbindungsabschnitt
- 3: Bohrerabschnitt
- 4: Teilbereich
- 5: erster Übergangsbereich
- 6: Oberfläche
- 7: zweiter Übergangsbereich
- 8: Bohrerspitze
- 9: Schneiden
- 10: Spiralnuten
- 11: Konus
- 12: Zylinderbereich
- 13: Mantellinie
- 14: Mantellinie
- 15: Kühlkanal
- 16: Austrittsöffnung
- 17: gebogenes Trapez
- 18: Grundseite
- 19: Grundseite
- 20: Schenkel
- 21: Schenkel
- 22: gerundete Ecke
- 23: Stirnfläche
- 24: Oberfläche
- 25: Eintrittsöffnung
- 26: innere Wand
- 27: äussere Wand
- 28: Seitenwand
- α: Konuswinkel
- β: Konuswinkel
- D1: Einspanndurchmesser
- D2: Durchmesser des Verbindungsabschnittes
- D3: Bohrerdurchmesser
- L1: Länge des Einspannabschnittes
- L2: Länge des Verbindungsabschnittes
- L3: Länge des Bohrerabschnittes

## Patentansprüche

1. Bohrwerkzeug zur Herstellung einer Bohrung umfassend einen Einspannabschnitt (1) mit einer Mittelachse (M) und einem Einspanndurchmesser (D1), einen sich dem Einspannabschnitt (1) in Richtung der Mittelachse (M) anschliessenden Bohrerabschnitt (3) mit einem Bohrerdurchmesser (D3), wobei der Bohrerdurchmesser (D3) kleiner ist als der Einspanndurchmesser (D1), **dadurch gekennzeichnet,**
**dass** das Bohrwerkzeug weiter mindestens einen Fluidkanal (15) umfasst, welcher sich mindestens teilweise durch den Einspannabschnitt (1) hindurch erstreckt, und vom Einspannabschnitt (1) entlang der Mittelachse (M) her gesehen vor dem Bohrerabschnitt (3) mit mindestens einer Austrittsöffnung (16) heraustritt, wobei ein Fluid über die Austrittsöffnung (16) aus dem Fluidkanal (15) herausführbar ist.

2. Bohrwerkzeug nach Anspruch 1, **dadurch gekennzeichnet, dass** der mindestens eine Fluidkanal (15) parallel und/oder beabstandet zur Mittelachse (M) verläuft.

3. Bohrwerkzeug nach einem der vorhergehenden Ansprüche, **dadurch gekennzeichnet, dass** zwischen dem Einspannabschnitt (1) und dem Bohrerabschnitt (3) ein Übergangsbereich (7) angeordnet ist, über welchen der Durchmesser vom Einspannabschnitt (1) zum Bohrerabschnitt (3) verringert wird, wobei die besagte Austrittsöffnung (16) im Übergangsbereich (7) liegt und/oder dass der Einspannabschnitt (1) auf der dem Übergangsbereich (7) gegenüberliegenden Seite eine Stirnfläche (23) umfasst, durch welche der Fluidkanal (15) mit einer Eintrittsöffnung in den Einspannabschnitt (1) hereintritt.

4. Bohrwerkzeug nach einem der vorhergehenden Ansprüche, **dadurch gekennzeichnet, dass** pro Fluidkanal (15) je eine Austrittsöffnung (16) vorgesehen ist, oder dass pro Fluidkanal (15) mehrere Austrittsöffnungen (16) vorgesehen sind.

5. Bohrwerkzeug nach einem der vorhergehenden Ansprüche, **dadurch gekennzeichnet, dass** der Fluidkanal (15) durch Seitenwände (26, 27, 28) begrenzt ist, wobei eine innere Seitenwand (26), welche der Mittelachse (M) zugewandt ist, um die Mittelachse (M) gekrümmt ausgebildet ist.

6. Bohrwerkzeug nach einem der vorhergehenden Ansprüche, **dadurch gekennzeichnet, dass** der Fluidkanal (15) eine Querschnittsform aufweist, welche in einer Ebene senkrecht zur Mittelachse (M) gesehen im wesentlichen einem um die Mittelachse (M) gebogenen Trapez (17) entspricht, wobei die Grundseiten (18, 19) des Trapezes bezüglich der Mittelachse (M) gekrümmt ausgebildet sind und eine innere Wand (26) und eine äussere Wand (27) definieren, und wobei sich die Schenkel (20, 21) des Trapezes bezüglich der Mittelachse (M) im wesentlichen radial nach aussen erstrecken und Seitenwände (28) definieren, oder dass der Fluidkanal (15) eine halbrunde Querschnittsform aufweist.

7. Bohrwerkzeug nach einem der vorhergehenden Ansprüche, **dadurch gekennzeichnet, dass** die Gesamtquerschnittsfläche (Q, Q1) aller Fluidkanäle (15) im Bereich von 20% bis 40%, insbesondere im Bereich von 25% bis 35%, besonders bevorzugt im Bereich von 28% bis 32% der Querschnittsfläche (Q2) des Einspannabschnittes (1) liegt.

8. Bohrwerkzeug nach einem der vorhergehenden Ansprüche, **dadurch gekennzeichnet, dass** mindestens zwei, vorzugsweise drei oder vier oder fünf oder sechs, Fluidkanäle (15) in regelmässigen Winkelabschnitten (Δ) zueinander angeordnet sind.

9. Bohrwerkzeug nach einem der vorhergehenden Ansprüche, **dadurch gekennzeichnet, dass** die Austrittsöffnungen (16) derart angeordnet, dass diese mit der zur Mittelachse (M) näherliegenden Seitenwand (19) einem Abstand von mindestens dem halben Bohrerdurchmesser (D3) aufweisen.

10. Bohrwerkzeug nach einem der vorhergehenden Ansprüche, **dadurch gekennzeichnet, dass** der Bohrerdurchmesser (D3) im Bereich von 0.01 mm bis 2 mm, insbesondere im Bereich von 0.05 mm bis 1.2 mm liegt.

11. Bohrwerkzeug nach einem der vorhergehenden Ansprüche, **dadurch gekennzeichnet, dass** zwischen dem Einspannabschnitt (1) und dem Bohrerabschnitt (3) ein Verbindungsabschnitt (2) angeordnet ist, welcher mindestens über einen Teilbereich (4) einen Verjüngungsdurchmesser (D2) aufweist, der kleiner ist als Bohrerdurchmesser (D3), wobei dieser Teilbereich (4) einen flexiblen Abschnitt bereitstellt, welcher eine Auslenkung des Bohrerabschnittes (3) seitlich zur Mittelachse (M) bzw. seitlich zum Einspannabschnitt (1) ermöglicht.

12. Bohrwerkzeug nach Anspruch 11, **dadurch gekennzeichnet,**
**dass** der Verbindungsabschnitt (2) die Gestalt eines Zylinders aufweist und sich entlang der Mittelachse (M) zylindrisch mit einem Zylinderdurchmesser (D2) erstreckt, wobei der Zylinderdurchmesser (D2) dem besagten Verjüngungsdurchmesser (D2) entspricht, oder
**dass** der Verbindungsabschnitt (2) die Gestalt mindestens eines Konus (11) aufweist und sich entlang der Mittelachse (M) konisch erstreckt, wobei der minimale Durchmesser (D2) des Konus (11) dem besagten Verjüngungsdurchmesser (D2) entspricht, wobei sich der Konus (11) in der Richtung vom Bohrerabschnitt (3) zum Einspannabschnitt (1) kontinuierlich verjüngt, und/oder dass sich der Konus (11) in der Richtung vom Einspannabschnitt (1) zum Bohrerabschnitt (3) kontinuierlich verjüngt.

13. Bohrwerkzeug nach einem der Ansprüche 11 bis 12, **dadurch gekennzeichnet,**
**dass** sich dem Konus (11) ein Zylinderbereich (12) mit konstantem Durchmesser (D2) anschliesst, wobei der Durchmesser des Zylinderbereiches gleich dem besagten Verjüngungsdurchmesser (D2) des besagten Teilbereiches (4) ist und wobei der Zylinderbereich sich an der Seite am Konus anschliesst, welche den Verjüngungsdurchmesser (D2) aufweist und/oder
**dass** der Verjüngungsdurchmesser (D2) im Bereich von 70% bis 90%, insbesondere im Bereich von 75% bis 85%, besonders bevorzugt bei 80%, des Bohrerdurchmessers (D3) liegt und/oder
**dass** der Verbindungsabschnitt (2) eine Länge (L2) aufweist, welche kleiner, gleich oder grösser ist als die Länge (L3) des Bohrerabschnittes (3), wobei die Länge (L2) des Verbindungsabschnittes (2) vorzugsweise um einen Faktor im Bereich von 0.5 bis 5, insbesondere im Bereich 1 bis 4, besonders bevorzugt um einen Faktor im Bereich von 1 bis 3, grösser als die Länge (L3) des Bohrerabschnittes (3) ist und/oder
**dass** die Oberfläche (6) des Verbindungsabschnittes (2) eine Oberflächenrauheit im Bereich von 0.01 µm bis 0.1 µm, insbesondere im Bereich von 0.025 µm bis 0.05 µm, aufweist.

14. Bohrwerkzeug nach einem der vorhergehenden Ansprüche, **dadurch gekennzeichnet,**
**dass** der Einspannabschnitt (1) die Gestalt eines Zylinders mit konstantem Einspanndurchmesser (D1) aufweist, wobei der Einspanndurchmesser (D1) grösser ist als der Verjüngungsdurchmesser (D2) des Verbindungsabschnittes (2), und/oder wobei der Einspanndurchmesser (D1) grösser ist als der Bohrerdurchmesser (D3) und/oder.
**dass** die Länge (L1) des Einspannabschnittes (1) um einen Faktor im Bereich von 0.5 bis 10, insbesondere im Bereich 0.7 bis 4, besonders bevorzugt um einen Faktor 0.7 bis 3, grösser als die Summe der Länge (L3) des Bohrerabschnittes (3) und der Länge (L2) des Verbindungsabschnittes (2) ist.

15. Bohrwerkzeug nach einem der vorhergehenden Ansprüche, **dadurch gekennzeichnet,**
**dass** sich der Übergangsbereich (7) bzw. der zweite Übergangsbereich (7) konisch ausgebildet ist, wobei sich der Durchmesser des zweiten Übergangsbereichs (7) vom Durchmesser (D2) des Verbindungsabschnittes über eine Übergangslänge (L7) kontinuierlich auf den Einspanndurchmesser (D1) vergrössert, oder wobei der erste Übergangsbereich (5) gerundet ausgebildet ist, oder wobei der zweite Übergangsbereich (7) abschnittsweise gerundet und abschnittsweise konisch ausgebildet ist,
oder, dass der der Übergangsbereich (7) bzw. der zweite Übergangsbereich (7) als Stufe ausgebildet ist, wobei sich der Durchmesser direkt vom Einspanndurchmesser (D1) auf den Durchmesser (D2) des Verbindungsabschnittes (2) verringert.
